# EUROPEAN PATENT APPLICATION

(11) **EP 1 107 541 A2**
(43) Date of publication of application: **13.06.2001**
(21) Application number: 00310848.7
(22) Date of filing: 06.12.2000
(51) Int. Cl.: H04L 29/06, G06F 3/033

(54) **Client server system and data transmission method in a client server system**

(30) Priority: 07.12.1999 JP 34813499
(71) Applicant: Kizna.com Inc., Delaware 19801 (US)
(72) Inventor: Miyazawa, Takeo, Mitaka-shi, Tokyo 181-0013 (JP); Okada, Tetsuya, Tokyo 166-0003 (JP)
(74) Representative: Brown, Kenneth Richard

(57) **Abstract**

The destination setting operation of conventional electronic mail is not graphical. The present invention provides a graphical user interface with excellent operability as message exchange means. In a client server system, the server comprises a transmission/receiving part, an icon transfer part for transferring an icon received by the transmission/receiving part to another client, and a screen creation part for receiving an icon from the transmission/receiving part and creating a message board screen, the client comprises a transmission/receiving part, an icon creation part for sending a transmission icon to the transmission/receiving part, and a screen creation part for receiving an icon received by the transmission/receiving part and/or an icon created by the icon creation part and creating a message board screen, the above mentioned client, when a new icon is created, displays the icon on its message board screen and sends the icon to the server, and the above mentioned server receives the icon, displays the icon on its message board screen, and transfers the icon to another client. Here the difference message transmission method is used.

## Description

### BACKGROUND OF THE INVENTION

### 1. Field of the Invention

The present invention relates to a client server system where messages can be easily exchanged using icons, a data transmission method of the client server system, and a medium recording program thereof, in a client server system comprising a server and a plurality of clients connected to the server via communication lines.

### 2. Description of the Related Art

Electronic mail is widely known as a typical message exchange means in a client server system.

For conventional electronic mail, the destination must be input using an address book. This operation is not graphical. Most user interfaces of current computers, however, are graphical and easy to understand, are operated by dragging and dropping icons, and have superb operability. A graphical user interface with superb operability is demanded for message exchange means as well.

### SUMMARY OF THE INVENTION

To solve the above problem, a client server system according to the present invention comprises a server and a plurality of clients connected to the server via communication lines, wherein the above mentioned server further comprises a transmission/receiving part, an icon transfer part for transferring an icon received by the transmission/receiving part to another client, and a screen creation part for receiving an icon from the transmission/receiving part and creating a message board screen, the above mentioned client further comprises a transmission/receiving part, an icon creation part for sending a transmission icon to the transmission/receiving part, and a screen creation part for receiving an icon received by the transmission/receiving part and/or an icon created by the icon creation part and creating a message board screen, the above mentioned client displays a new icon on its message board screen when the icon is created and sends this icon to the server, and the above mentioned server receives the icon, displays the icon on its message board screen, and transfers this icon to another client.

It is preferable that the above mentioned message board includes a generation number to indicate the message status as an attribute thereof, the generation number is updated at least when a new message is posted on the message board, when a message on themessage board is corrected, or when a message onthe message board is deleted, and the above mentioned client receives the generation number from the server, and requests the icon transfer part of the server to transfer the icon when the generation number received at this time is different from the generation number received at a previous time.

It is preferable that a message includes an ID number as an attribute thereof, and when a new message is posted on the message board, the updated generation number is set as the ID number, and when a message on the message board is corrected, the ID number is not updated, and when a message on the message board is deleted, the ID number is not updated but the content of the message is overwritten with a pseudo-message.

It is preferable that when the above mentioned client receives an icon from the icon transfer part of the server and a message with the same ID number as the ID number of the message related to the transferred icon is not on its message board, the client registers the message with this ID number as a new message, when a message with the same ID number as the ID number of the message related to the transferred icon is on its message board, the client corrects the message with this ID number on its message board by replacing it with a new message received from the server, and when a message with the same ID number as the ID number of the message related to the transferred icon is on its message board and the message received from the server is a pseudo-message, the client deletes the message with this ID number on its message board.

It is preferable that the client server system according to the Claim 2 is characterized in that the above mentioned client requests the server to notify the generation number at a predetermined time interval.

A client server system according to the present invention is a client server system comprising a server and a plurality of clients connected to the server via communication lines, wherein the above mentioned server further comprises a transmission/receiving part, an icon transfer part which transfers an icon received by the transmission/receiving part to another client, and a screen creation part which receives an icon from the transmission/receiving part and creates a message board screen, the above mentioned client further comprises a transmission/receiving part, an icon creation part which sends a transmission icon to the transmission/receiving part, and a screen creation part which receives an icon received by the transmission/receiving part and/or an icon created by the icon creation part and creates a message board screen, said client displays a new icon on its message board screen when the icon is created and sends the icon to the server, the above mentioned server receives the icon, displays it on its message board screen and transfers the icon to another client, and the above mentioned icon indicates the positional relationship of the message board and the message and/or the positional relationship between the messages.

It is preferable that the above mentioned client is a portable information terminal comprises a flat panel display, and the above mentioned icon is represented by one or more dots on the flat panel display.

A data transmission method for a client server system according to the present invention is a data transmission method for a client server system which is comprised of a server and a plurality of clients connected to the server via communication lines, comprising: a step of the client inquiring a generation number to indicate a message status to the server; a step of the client comparing the generation number at this time with the generation number at a previous time; a step of the client requesting transmission of a message to the server; a step of the client judging whether the ID number included in the received message matches the ID number of the message already existing on the message board; a step of registering the message with this ID number as a new message when the message with the ID number the same as that received from the server does not exist on its message board; a step of correcting a message by replacing a message with the ID number with a new message received from the server when the message with the ID number the same as that received from the server exists on its message board; and a step of deleting a message with the ID number on its message board when the message with the ID number the same as that received from the server exists on its message board and the message received from the server is a pseudo-message.

A data transmission method for a client server system according to the present invention is a data transmission method for a client server system which is comprised of a server and a plurality of clients connected to the server via communication lines, comprising: a step of the server preparing its message board to post a message from the client; a step of the server preparing a generation number to indicate a message status on the message board as an attribute thereof; a step of the server preparing an ID number corresponding to a message of the message board; a step of the server initializing the generation number; a step of the server updating the generation number at least when a new message is posted on the message board, when a message on the message board is corrected or when a message on the message board is deleted; a step of the server setting the updated generation number as the ID number when a new message is posted on the message board; a step of the server overwriting the content of the message with a pseudo-message without updating the ID number when a message on the message board is deleted; and a step of the server sending the message to the client according to a request from the client.

The present invention is a medium recording a program for a computer to execute the data transmission method for a client server system which is comprised of a server and a plurality of clients connected to the server via communication lines, wherein the program is for executing: a step of the client inquiring a generation number to indicate a message status to the server; a step of the client comparing the generation number at this time with the generation number at a previous time; a step of the client requesting transmission of a message to the server; a step of the client deciding whether the ID number included in the received message matches the ID number of the message already existing on the message board; a step of registering a message with the ID number as a new message when the message with the ID number the same as that received from the server does not exist on its message board; a step of correcting a message by replacing a message with the ID number with a new message received from the server when the message with the ID number the same as that received from the server exists on its message board; and a step of deleting a message with the ID number on its message board when the message with the ID number the same as that received from the server exists on its message board and the message received from the server is a pseudo-message.

The present invention is a medium recording a program for a computer to execute the data transmission method for a client server system which is comprised of a server and a plurality of clients connected to the server via communication lines, wherein the program is for executing: a step of the server preparing its message board to post a message from the client; a step of the server preparing a generation number to indicate a message status on the message board as an attribute thereof; a step of the server preparing an ID number corresponding to a message on the message board; a step of the server initializing the generation number; a step of the server updating the generation number at least when a new message is posted on the message board, when a message on the message board is corrected, or when a message on the message board is deleted; a step of the server setting the updated generation number as the ID number when a new message is posted on the message board; a step of the server overwriting the content of the message with a pseudo-message without updating the ID number when the message on the message board is deleted; and a step of the server sending the message to the client according to the request from the client.

The medium includes, for example, a floppy disk, a hard disk, a magnetic tape, a magneto-optical disk, a CD-ROM, a DVD, a ROM cartridge, a RAM memory cartridge with a backup battery, a flash memory cartridge and a non-volatile RAM cartridge.

A cable communication medium, such as a telephone line, and a wireless communication medium, such as a microwave line, are also included in the medium. Internet is also included in the communication medium here.

A medium is a material substance where information (mainly digital data and programs) is recorded by some physical means, and allows a processing unit, such as a computer and a dedicated processor, to execute predetermined functions. In essence, a medium downloads a program to the computer by some means and has the computer execute the predetermined functions.

When a collaboration processing is executed via the Internet, a fire wall existing in a network may pose a problem. This is because a fire wall allows only predetermined protocols to pass and discards other packets. For example, even if such software as REAL VIDEO and chat is to be executed, a fire wall interferes with their execution. A fire wall passes only limited protocols such as mail, TCP/IP and HTTP.

To execute collaboration processing, the settings of a fire wall must be changed so that other protocol packets can pass through. This, however, is virtually impossible. Since there are many fire walls in a network, all related fire walls must be changed.

So in the present invention, a tunneling technology is used so that processing with HTTP protocol becomes possible. Tunneling is a technology to encapsulate a packet in a lower layer of the OSI reference model with a higher layer protocol, so as to allow communication between two points on a network. An ordinary packet and an encapsulated packet are indistinguishable on a network, but equipment on both ends can acquire an original packet by decapsulating. This technology is called "tunneling" since communication is made possible by creating an invisible path on the Internet. Generally a packet of the network layer protocol of the OSI reference model has a protocol which is higher than the network layer.

HTTP largely transmits requests from a client to a server, and the server never requests communication directly to the client. In this invention, however, the server must transmit a message to a client when the client posts a new message to the server. So the client inquires the server at a predetermined interval. Details will be described later.

Using the above mentioned technology, an icon, that is, a message, is exchanged between the server and the client. The message board, message and icon will now be described. The message board is an area where an icon (message) is posted, and is displayed as a predetermined area on the screen, which is an area for a memory or an external memory. In this area, a new icon (message) is posted, and a posted icon (message) is corrected or deleted. An icon is a symbol for exchanging a message, and an icon is associated with a message. An icon is not a message itself, but a message can be accessed via an icon. An icon is generally a small mark on a computer screen indicating some processing. In this case, an icon is a color graphic image but an icon in the present invention is not limited to this. In the present invention, an icon is something (symbol) to symbolize a message, and a color graphic image is an example. A symbol comprised of one or more monochrome dots, to be displayed on a small liquid crystal screen of a portable information terminal, for example, is also included in the icon of the present invention. In other words, an icon is something which indicates the positional relationship of a message board and a message and/or the positional relationship between messages. As long as the correspondence relationship between an icon and a message is maintained, it does not matter whether an icon and a message are at the same position or at different positions on the screen. When there are a plurality of screens, an icon and a message may be on different screens.

### BRIEF DESCRIPTION OF THE DRAWINGS

Fig. 1 is a general block diagram of the system according to the embodiment;
Fig. 2 is a conceptual diagram of the system according to the embodiment;
Fig. 3 is a diagram depicting the general processing of the system according to the embodiment;
Fig. 4 is a processing flow chart of a client of the system according to the embodiment;
Fig. 5 is a processing flow chart of a server of the system according to the embodiment;
Fig. 6 is a processing flow chart of another client of the system according to the embodiment;
Fig. 7 is a flow chart of the security processing of the system according to the embodiment;
Fig. 8 is an example of a display screen of a message board system according to the present embodiment;
Fig. 9 is a functional block diagram depicting the image generation of a post office box system according to the present embodiment;
Fig. 10 is a processing flow chart depicting the security of a post office box system according to the present embodiment;
Fig. 11 is an example of a display screen of a post office box system according to the present embodiment;
Fig. 12 is a flow chart depicting the operation of a server in the difference message transmission method according to the present embodiment; and
Fig. 13 is a flow chart depicting the operation of a client in the difference message transmission method according to the present embodiment;

### DESCRIPTION OF THE PREFERRED EMBODIMENTS

A system of an embodiment of the present invention is an icon-driven server/client system for transmitting/receiving a message in real-time. A major difference from conventional systems is intuitive and direct message addressing by dragging and dropping icons. The system of the present invention provides a new communication and joint operation method in the Internet/intranet community.

The way of use of this system is very simple. The user merely accesses the server to use such boards as a message board, white board, chess board, map and image, which will be described later, any time, writing a desired message and sharing the message with other individuals by dragging and dropping an icon on a board.

The features of this system are easy to install, easy to use, and easy to customize. Also, this system is easier to use than any other communication, collaborative and joint operation software, used for a message board, labeling software, white board, chat and electronic mail.

To use this system, the server must be a CGI supported Web server, and must support Java. The client is a Java supported Web browser and must support the virtual machine/runtime environment of Java.

Generally this system has the following functions.
- Message creation function This is a function to create a message to send to a destination. For example, when an icon to send a message is clicked, a dialog box is displayed on a screen, and the icon and the message are linked by writing the message in this dialog box. This dialog box may be displayed not only when the icon is clicked, but also when the icon is dragged and dropped.
- Message addressing function This is a function to decide the destination to which a message is sent. The destination must be input by characters in conventional electronic mail software. Specifically, this function defines and controls an area on the screen corresponding to each client, and judges which area an icon, is dragged and dropped, that is, which destination the message is addressed to.
- Security function This is a function to control access to an icon and/or a message. This function grants permission to read, move, correct or delete an icon and/or a message. For example, anyone can read the message of an icon posted in a public space, but only the specified user can read an icon posted in a private space.
- Broadcast function This is a function to send a message to all users without specifying a specific destination.
- Association function This is a function to set a link to a related home page, and set and display such an attribute as emergency, sold out, discount and new product.

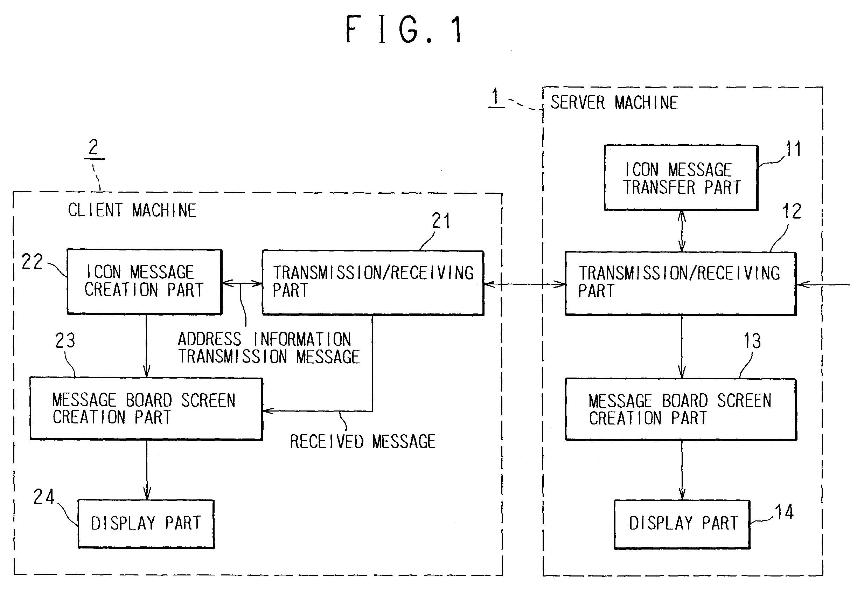

This embodiment will now be described in more detail with reference to the accompanying drawings. Fig. 1 is a functional block diagram depicting the general configuration of a server machine 1 and a client machine 2 used for this system. The server machine 1 comprises a message transfer part 11 which transfers a received message if necessary, a transmission/receiving part 12 for communicating with the client machine, a message board screen creation part 13 which creates a message board screen based on the received message, and a display part 14 which receives the output of the screen creation part 13 and displays the screen. The client machine 2 comprises a transmission/receiving part 21 for communicating with the server machine, a message creation part 22 for creating a transmission message, a message screen creation part 23 which receives a transmission message from the message creation part 22, receives a received message from the transmission receiving part 21 and displays these messages on the message board, and a display part 24 which receives the output of the screen creation part 23 and displays the screen.

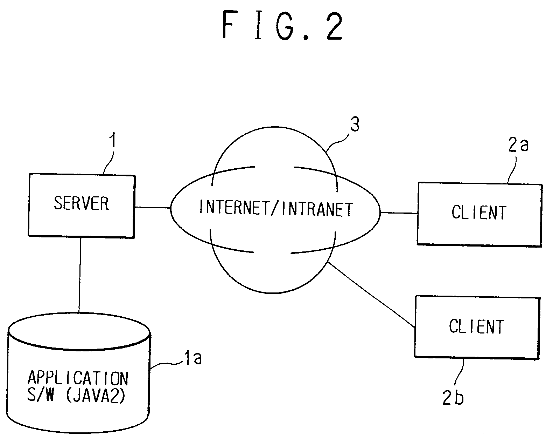

Fig. 2 is a conceptual diagram depicting the general configuration of this system. The clients 2a and 2b can access the server 1 via the Internet/intranet 3. The server 1 stores the application software (Java applet) for this system in the external storage memory la in advance. When the client accesses the server, application software for the client is downloaded and this system becomes accessible.

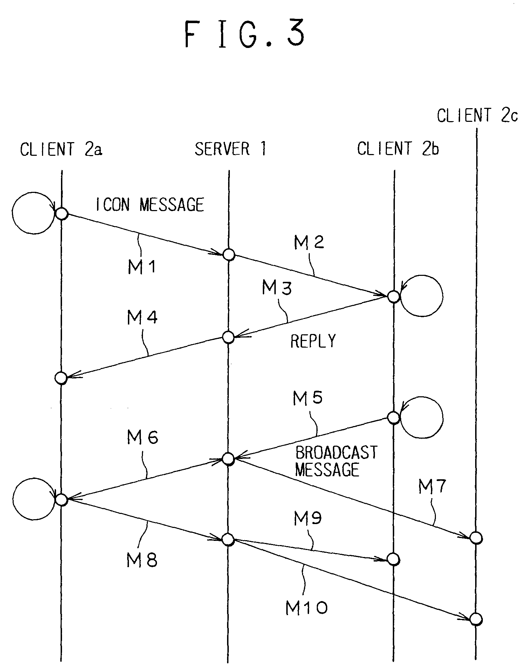

Fig. 3 is an overview of a message exchange between the server 1 and the clients 2a, 2b and 2c. When the client 2a creates a message, the message M1 is sent to the server 1 and is also displayed on its screen. The server 1 identifies the destination of the received message M1, and sends the message to the destination client 2b (M2). When the client 2b creates a reply message, the reply message is sent to the client 2a (M3, M4). If the message is a broadcast message, the message M5 sent from the server 1 is sent to all the other clients 2a and 2c too (M6, M7). The reply message M8 from the client 2a is also sent to all the clients 2b and 2c (M9, M10). In this way, a message can be communicated among all the clients 2a, 2b and 2c via the server 1. The message communication will be described in detail later.

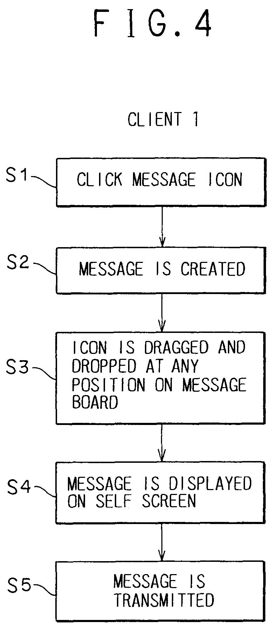

Fig. 4 is a processing flow in a client which transmits a message. At first, when the user clicks the message icon (S1), a message creation dialog is displayed. Here the user can create an arbitrary message (S2). The user drags and drops an icon on to an arbitrary position of the message board (S3). The user can transmit a message by this operation. The client displays the message on its screen (S4) and transmits the message (S5).

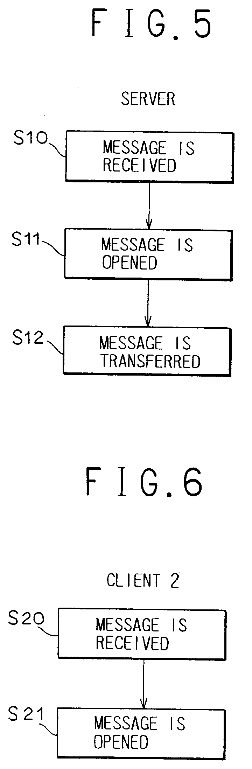

Fig. 5 shows a processing flow of a server. When a message is received (S10), the server opens the message (S11) and stores it in its memory. And the server transfers the message to a predetermined destination (S12).

Fig. 6 shows a processing flow in a client which receives a message. When a message is received from the server (S20), the client opens the message (S21) and displays the message on its message board.

By the processing in Fig. 4 to Fig. 6, the writing of a message in each client is immediately mirrored on the screens of the other clients. In this way, the transmission and receiving of a message between arbitrary clients can be known synchronously in real-time. Management is easy since all information masses at this server.

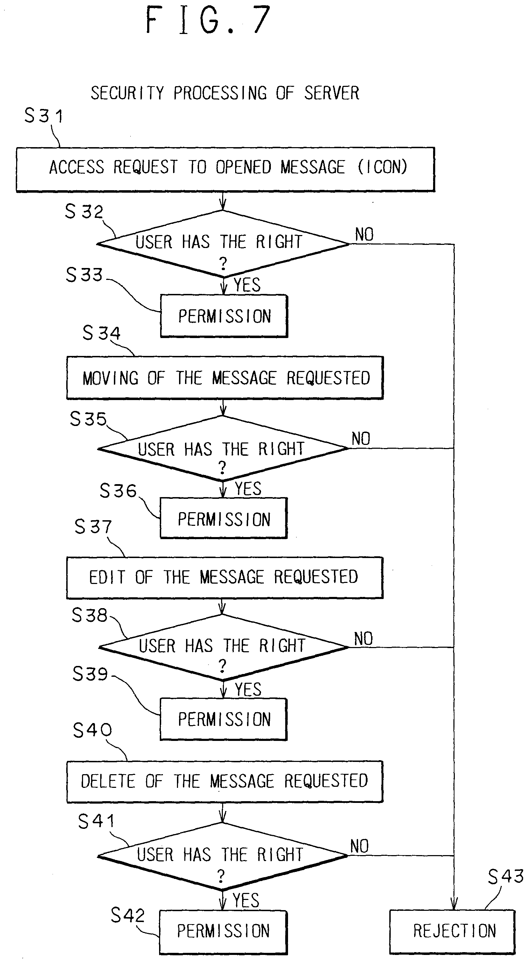

Fig. 7 shows a flow of security processing in a server. When the server receives an access request for an opened message (icon) (S31), the server confirms whether the requesting user has the right (S32), grants it if the user has the right (S33) and rejects it if not (S43). Similar processing is also performed for a request for moving a message (that is, changing the transmission destination address), editing a message and deleting a message (S34 - S42). For example, if this system is a bulletin board which anyone can access, access and moving are permitted to anyone. However, editing and deleting are permitted only for the message sender or administrator.

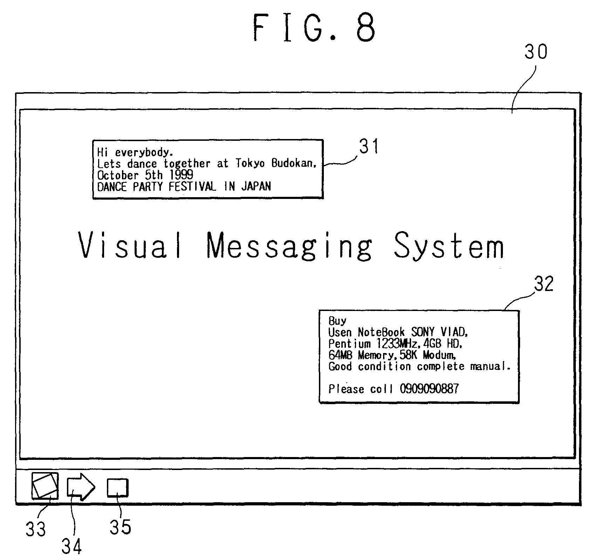

Fig. 8 is an example of the message board screen of this system. On this screen, the message board 30, and examples of the messages 31 and 32 to be displayed here are displayed. The icons 33, 34 and 35 at the bottom of the screen are a message creation icon 33, a GO icon 34 to create a link to a related home page, and a trash can icon 35 to delete a message.

Based on Fig. 8, the operation method of this system will be described. To send a message, the icon 33 is clicked and a message is created. And the icon 33 is dragged and dropped on to an arbitrary position of the message board 30. Then the message is opened and can be read as in the status of 31 and 32. This screen status is the same for all clients because of the flow shown in Fig. 3. Therefore, the user can read all messages on the screen of its client machine. Unlike a broadcast of conventional electronic mail, this system can send a message to all participating users without specifying a destination. Also, an operation using an icon is intuitive and easy to understand, so this system is very easy to use.

Security problems do not become very acute in this message board. Anyone can create a message, and post and delete a message. Naturally it is easy to heighten security so that only a specified individual (e.g. administrator) can move and delete a message (see Fig. 7).

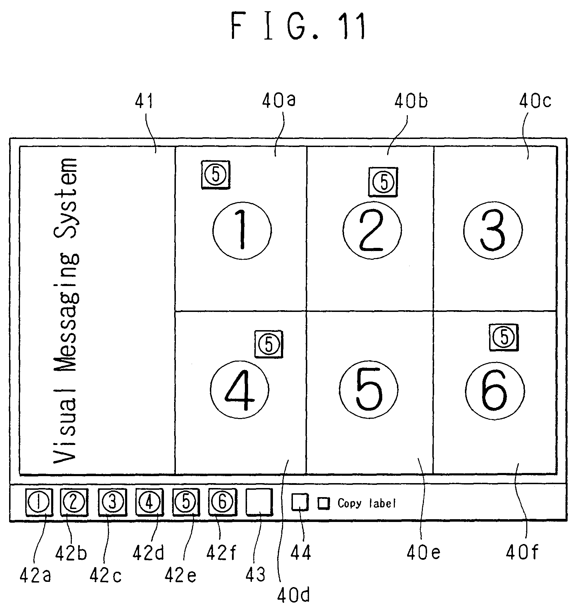

One application example of the message system of this invention will be shown below. The system according to this second embodiment is a simulation of a mail box (post office box). Each user has their own post office box (areas indicated by 40 a - 40 f in Fig. 11) and icons 42a - 42f. This post office box system is a good example of a system where a relatively small group (e.g. 5 to 10 users) communicates and performs joint operation.

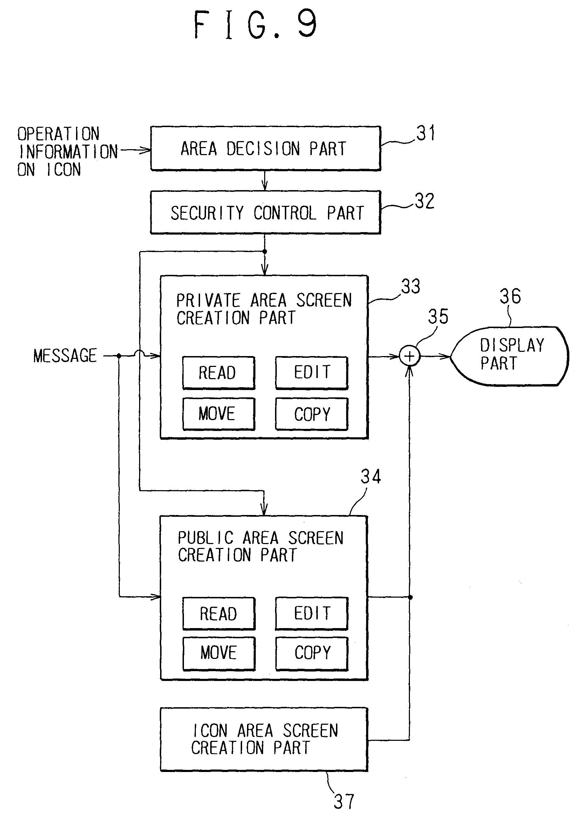

Fig. 9 shows a functional block diagram of this system. Fig. 9 shows the security control part and the image display part of the system. The private area screen creation part 33 creates a screen for each user area 40a - 40f. The private area screen creation part 33 may be set corresponding to each user area 40a - 40f. The private area screen creation part 33 has functions to read, edit, move and copy icons. These functions are executed according to permission granted by the security control part 32. The public area screen creation part 34 generates a screen for the public area 41. In this area, the user can freely operate all icons. Operation information on the icons is input to the area decision part 31, and the area where the icon is operated is judged. Based on this decision result, the security control part 32 judges whether the operation of the icon is permitted. This output is sent to each one of the private area screen creation parts 33. If security control is required in the public area, this output is also sent to the public area screen generation part 34. Outputs of the screen creation parts 33 and 34 are synthesized by the synthesis part 35, and the synthesized output is displayed in the display area.

In the system of the present embodiment, if a message is sent to another user, the user drags their own icon (e.g. the icon 42e for the user in the area 40e) to the post office box of the destination (e.g. area 40a, 40b, 40d or 40f). For this icon, only the receiving user can read this message. The other users cannot read, move or delete this message. The public area 41 at the left is for all users, and anyone can read, move or delete the message posted in this area. Naturally the security function may be heightened so that only the administrator can move or delete the message, just like the case of the message board. An emergency icon 43 may be dragged to the message board for an emergency message. In this case, not an icon but the message itself may be displayed. To send a message to a plurality of destinations, the icon can be copied and moved to the area of the destination.

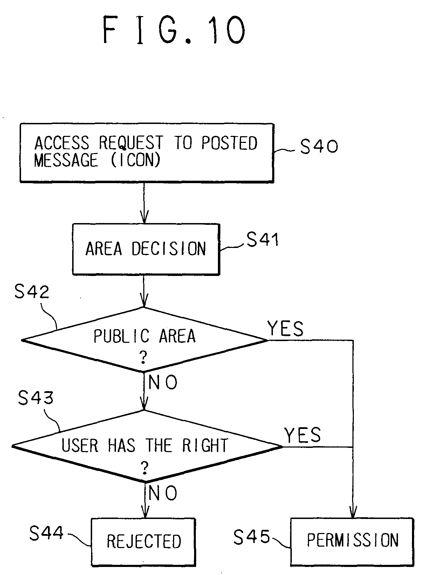

Fig. 10 shows a flow chart on security. When an access request to the posted message (icon) is received (S40), the area is judged first (S41). If the decided area is a public area, access is permitted (S45). Otherwise, it is checked whether the user has the right (S43), access is permitted if the user has the right (S45), and is rejected if not.

According to the system of this embodiment, a message is represented by an icon, and a message can be transmitted by dragging and dropping an icon, so a very clear interface can be provided. Also security control is performed based on the area of the screen, so processing is easy and can be easily understood by the user. A user other than the receiver cannot read a message, but can know the users who exchange a message since the position of an icon can be recognized.

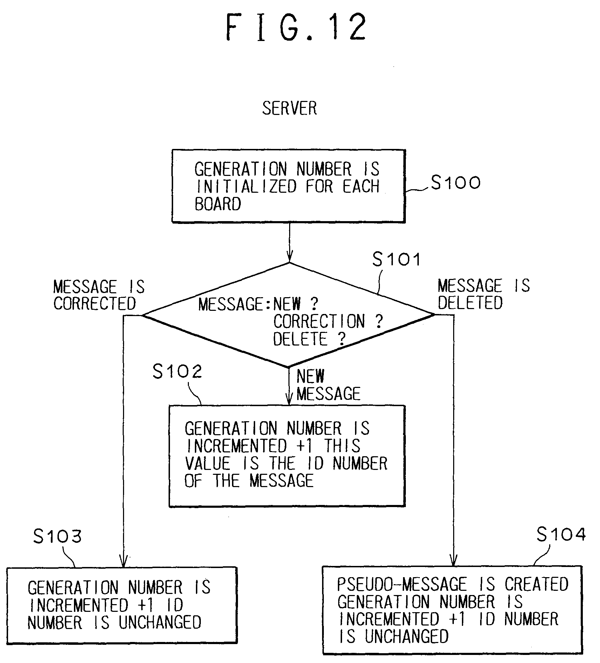

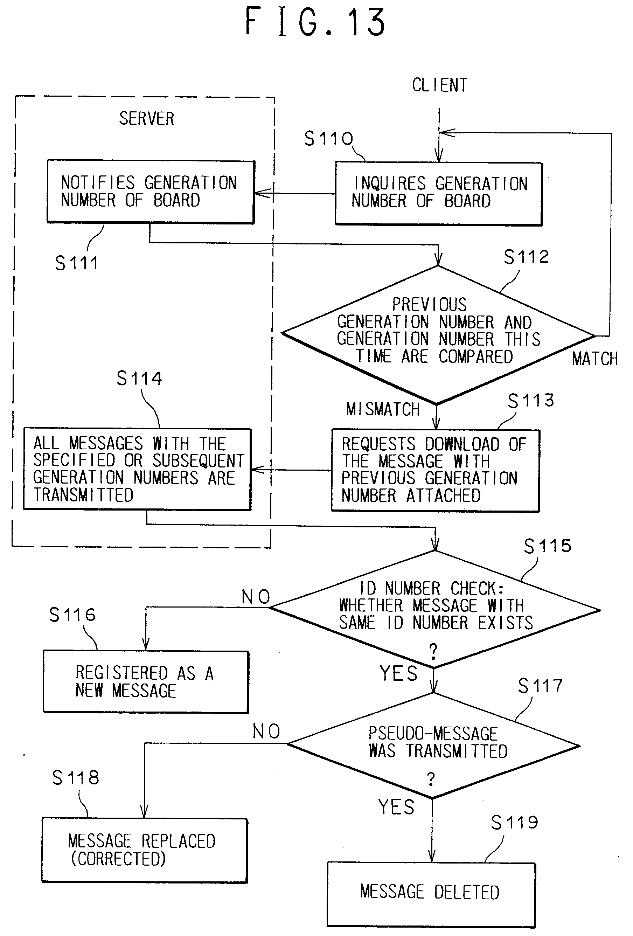

Now a specific message transmission procedure will be described with reference to Fig. 12 and Fig. 13. The present embodiment adopts the difference message transmission method for transmitting only an updated message from the server to the client.

First the processing at the server side will be described with reference to Fig. 12. The server (servelet) holds a number called the "generation number" for each board. Each message has an ID number and a generation number. The generation number is initialized to "0" when the board is created (S100), and is updated (+1) each time a change is made for the board (S102 to S104).

When a new message is posted, the generation number on the board is incremented +1, and this new generation number becomes the ID number and the generation number of the message (S102).

When a message is corrected, the generation number on the board is incremented +1, and this becomes the new generation number of this message. The ID number of the message is not changed (S103).

According to the above procedure, all messages on the board have a unique ID number and generation number. The server holds the index information on a message based on the ID number and the generation number of the message.

When a message is deleted, the server creates a "pseudo-message", which represents a deletion, instead of the message, and performs the same processing as the above mentioned message correction (S104). This pseudo-message has only an ID number and a generation number.

Now processing at the client side will be described with reference to Fig. 13.

The client periodically (e.g. once every 5 - 30 seconds) inquires the current generation number of the board to the server (S110). The client compares the generation number at this time with the previous generation number (S112), and only when a different number is acquired, the client requests with the previous generation number to download messages of this and subsequent generation numbers (S113).

The server which received the above request sends all messages with the specified and subsequent generation numbers, including pseudo-messages, to the client using the index information (S114).

The client confirms the ID number of the received message (S115), replaces a message with the same ID number if any (S118: correction processing), and handles this message as a newmessage if there is no message with the same ID number. If the transmitted message is a pseudo-message (S117), then the message having the same ID number as the ID number is deleted (S119).

By the above processing, all clients can have the same information when a new message is posted on the board, and when a message is corrected or deleted.

The present invention is not limited to the above embodiment, but can be modified in various ways within the scope of the Claims, and needless to say these variant forms are also included in the scope of the present invention.

In this description, means is not necessarily a physical means, but includes the case when a function of each means is implemented by software. A function of one means may be implemented by two or more physical means, or the functions of two or more means may be implemented by one physical means.

## Claims

1. A client server system comprising a server and a plurality of clients connected to said server via communication lines,
wherein said server comprises a transmission/receiving part, an icon transfer part for transferring an icon received by said transmission/receiving part to another client, and a screen creation part for receiving an icon from said transmission/receiving part and creating a message board screen,
wherein said client comprises a transmission/receiving part, an icon creation part for sending a transmission icon to said transmission/receiving part, and a screen creation part for receiving an icon received by said transmission/receiving part and/or an icon created by said icon creation part and creating a message board screen, and
wherein, when a new icon is created, said client displays the new icon on its message board screen and sends said icon to said server, and said server receives said icon, displays the icon on its message board screen, and transfers said icon to another client.

2. The client server system according to Claim 1, wherein said message board includes a generation number to indicate a message status as an attribute thereof, said generation number is updated at least when a new message is posted on said message board, when a message on said message board is corrected, or when a message on said message board is deleted, and said client receives said generation number from the server, and requests said icon transfer part of said server to transfer the icon when the generation number received at this time is different from the generation number received at a previous time.

3. The client server system according to Claim 2, wherein a message includes an ID number as an attribute thereof, and the updated generation number is set as said ID number when a new message is posted on said message board, the ID number is not updated when a message on said message board is corrected, and the ID number is not updated but the content of the message is overwritten with a pseudo-message when a message on said message board is deleted.

4. The client server system according to Claim 3, wherein when said client receives an icon from said icon transfer part of said server and a message with the same ID number as the ID number of the message related to the transferred icon is not on its message board, said client registers the message with this ID number as a new message,
when a message with the same ID number as the ID number of the message related to the transferred icon is on its message board, said client corrects the message with this ID number on its message board by replacing it with a new message received from the server, and
when a message with the same ID number as the ID number of the message related to the transferred icon is on the self message board and the message received from the server is a pseudo-message, said client deletes the message with this ID number on its message board.

5. The client server system according to Claim 2, wherein said client requests said server to notify said generation number at a predetermined time interval.

6. A client server system comprising a server and a plurality of clients connected to said server via communication lines, wherein said server comprise a transmission/receiving part, an icon transfer part which transfers an icon received by said transmission/receiving part to another client, and a screen creation part which receives an icon from said transmission/receiving part and creates a message board screen,
wherein said client comprises a transmission/receiving part, an icon creation part which sends a transmission icon to said transmission/receiving part, and a screen creation part which receives an icon received by said transmission/receiving part and/or an icon created by said icon creation part and creates a message board screen, and
wherein, when a new iron is created, said client displays the new icon on its message board screen and sends said icon to said server,
said server receives said icon, displays it on its message board screen and transfers said icon to another client, and
said icon indicates the positional relationship of the message board and the message and/or the positional relationship between the messages.

7. The client server system according to Claim 6, wherein said client is a portable information terminal comprising a flat panel display, and said icon is represented by one or more dots on said flat panel display.

8. A data transmission method for a client server system comprising a server and a plurality of clients connected to said server via communication lines, said data transmission method comprising:
a step the client inquiring a generation number to indicate a message status to the server;
a step of the client comparing the generation number at this time with the generation number at a previous time;
a step of the client requesting the server to transmit a message;
a step of the client judging whether the ID number included in the received message matches the ID number of the message already existing on the message board;
a step of registering the message with this ID number as a new message when the message with the ID number the same as that received from the server does not exist on its message board;
a step of correcting a message by replacing a message with the ID number with a new message received from the server when the message with the same ID number as that received from the server exists on its message board; and
a step of deleting a message with the ID number on its message board when the message with the same ID number as that received from the server exists on its message board and the message received from the server is a pseudo-message.

9. A data transmission method for a client server system comprising a server and a plurality of clients connected to said server via communication lines, said data transmission method comprising:
a step of the server preparing a self message board to post a message from said client;
a step of the server preparing a generation number to indicate a message status on said message board as an attribute thereof;
a step of the server preparing an ID number corresponding to a message of said message board;
a step of the server initializing said generation number;
a step of the server updating said generation number at least when a new message is posted on said message board, when a message on said message board is corrected or when a message on said message board is deleted;
a step of the server setting the updated generation number as said ID number when a new message is posted on said message board; a step of the server overwriting the content of said message with a pseudo-message without updating the ID number when a message on said message board is deleted; and
a step of the server sending the message to said client according to the request from the client.

10. A medium recording a program for a computer to execute the data transmission method for a client server system which comprises a server and a plurality of clients connected to said server via communication lines, wherein the program is for executing:
a step of the client inquiring a generation number to indicate a message status to the server;
a step of the client comparing the generation number at this time with the generation number at a previous time;
a step of the client requesting the server to transmit a message;
a step of the client deciding whether the ID number included in the received message matches the ID number of the message already existing on the message board;
a step of registering a message with the ID number as a new message when the message with the same ID number as that received from the server does not exist on its message board;
a step of correcting a message by replacing a message with the ID number with a new message received from the server when the message with the same ID number as that received from the server exists on its message board; and
a step of deleting a message with the ID number on its message board when the message with the same ID number as that received from the server exists on its message board and the message received from the server is a pseudo-message.

11. A medium recording a program for a computer to execute the data transmission method for a client server system which comprises a server and a plurality of clients connected to said server via communication lines, wherein the program is for executing:
a step of the server preparing its message board to post a message from said client;
a step of the server preparing a generation number to indicate a message status on the message board as an attribute thereof;
a step of the server preparing an ID number corresponding to a message on said message board;
a step of the server initializing said generation number;
a step of the server updating said generation number at least when a new message is posted on said message board, when a message on said message board is corrected, or when a message on said message board is deleted;
a step of the server setting the updated generation number as said ID number when a new message is posted on said message board;
a step of the server overwriting the content of said message with a pseudo-message without updating the ID number when the message on said message board is deleted; and
a step of the server sending the message to said client according to the request from the client.

12. A computer program comprising computer program code means adapted to perform all the steps of the data transmission method according to claim 8.

13. A computer program comprising computer program code means adapted to perform all the steps of the data transmission method according to claim 9.
